# EUROPÄISCHE PATENTSCHRIFT

(11) **EP 0 967 006 B1**
(45) Veröffentlichungstag und Bekanntmachung des Hinweises auf die Patenterteilung: **30.07.2003**
(21) Anmeldenummer: 99111405.9
(22) Anmeldetag: 11.06.1999
(51) Int. Cl.: B01J 8/04, C10L 3/10

(54) **Vorrichtung zur Durchführung katalytischer Reaktionen eines Fluids in der Gasphase**
Apparatus for the catalytic reaction of a fluid in the gas phase
Dispositif pour la réaction catalytique d'un fluide dans la phase gazeuse

(30) Priorität: 27.06.1998 DE 19828777
(43) Veröffentlichungstag der Anmeldung: 29.12.1999
(73) Patentinhaber: Uhde GmbH, 44141 Dortmund (DE)
(72) Erfinder: Marsch, Hans-Dieter, 44149 Dortmund (DE)
(74) Vertreter: Patentanwälte Meinke, Dabringhaus und Partner

(56) Entgegenhaltungen:
- DE-A- 3 607 118
- DE-A- 19 600 549
- US-A- 1 959 219
- US-A- 3 902 856
- PATENT ABSTRACTS OF JAPAN vol. 010, no. 377 (C-392), 16. Dezember 1986 (1986-12-16) & JP 61 171530 A (HITACHI LTD), 2. August 1986 (1986-08-02)

## Beschreibung

Die Erfindung richtet sich auf eine Vorrichtung der im Oberbegriff des Anspruches 1 angegebenen Gattung.

Es gibt eine Reihe katalytischer chemischer Reaktionen eines Fluids, wie beispielsweise der Entschwefelung von Kohlenwasserstoffen, hier sei als Beispiel die Entschwefelung von Erdgas genannt, bei denen zwei Katalysatoren in Strömungsrichtung des Fluids hintereinander geschaltet sind, wobei in vielen Fällen der in Strömungsrichtung erste Katalysator eine kürzere Lebensdauer aufweist als der zweite.

So werden beispielsweise in einer ersten Stufe etwa vorhandene organische Schwefelverbindungen unter Zugabe von Wasserstoff in H₂S umgewandelt. In einer zweiten Stufe wird das H₂S in einem Zink-Bett absorbiert, wobei das Katalysatorvolumen der ersten Stufe erheblich kleiner ist als in der zweiten Stufe. Dabei ist es bekannt, beide Katalysatoren innerhalb eines gemeinsamen Reaktordruckgefäßes unterzubringen, wobei schon wegen der unterschiedlichen Nutzzeiten in der Regel ein im Dom des Reaktors vorgesehenes erstes Mannloch zum Austausch des ersten Katalysators und ein im seitlichen Außenmantel vorgesehenes zweites Mannloch einen Raum erschließt, aus dem der zweite Katalysator dann zum Wechsel entnommen werden kann. Nachteilig an dieser Konstruktion ist, daß beispielsweise dieser zweite Raum zwischen den beiden Katalysatorbetten nicht benutzt werden kann.

Zum im weitesten Sinne hier betroffenen Stand der Technik sei beispielsweise auf die EP-0 400 698-A1 oder die US-3 544 264, US-3 817 716, US-3 620 685 oder US-4 830 834 verwiesen. Bei der Vorrichtung aus der oben genannten europäischen Anmeldung handelt es sich um einen Konverter, der vorzugsweise für die Behandlung staubhaltiger Gase verwendet werden soll. Dabei werden in der Vorzugsausführung zwei Katalysatorbetten eingesetzt.

Bei der US-4 830 843 handelt es sich um einen Wärmetauscher-Reformer, der zum Wärmebilanzausgleich für die Umwandlung von Erdgas und Dampf in H₂- und CO₂-haltiges Gasgemisch mit einem Brenner ausgerüstet ist, der ein heißes Rauchgas liefert, welches im indirekten Wärmetausch die Wärme an das Prozeßgas abgibt.

Der in der US-3 620 685 beschriebene Reaktor ist für einen Oxidehydro-Prozeß bestimmt. Dieser erfordert einerseits große Anströmflächen der Katalysatorschichten und andererseits hohe Abgasströmgeschwindigkeiten nach abgeschlossener katalytischer Behandlung.

Die US-3 817 716 beschreibt die Behandlung von Abgasen, die höhere Kohlenwasserstoffe und Aerosole enthalten, wobei schließlich die US-3 544 264 ein Abgaskatalysatorsystem für Kraftfahrzeuge zur Reduzierung von Schadstoffen, wie NOₓ und CO zeigt.

Der Erfindung liegt demgegenüber die Aufgabe zugrunde, neben der Vermeidung der oben beschriebenen Nachteile eine Vorrichtung mit zwei Katalysatorbetten unterschiedlicher Lebensdauer so zu gestalten, daß die Katalysatoren unabhängig voneinander gewechselt werden können, ohne Inkaufnahme ungenutzter Toträume und mit der Möglichkeit, jedes Bett umfahren zu können.

Mit einer Vorrichtung der eingangs bezeichneten Art wird diese Aufgabe gemäß der Erfindung dadurch gelöst, daß das im Strömungsweg erste Katalysatorbett ein kleineres Katalysatorvolumen aufweist als das zweite Katalysatorbett, das erste und zweite Katalysatorbett im wesentlichen zylindrisch ausgebildet sind, wobei die zylindrische Begrenzungswand des inneren Katalysatorbettes die zylindrische Innenwand des zweiten Katalysatorbettes bildet und das erste Katalysatorbett radial und das zweite Katalysatorbett axial durchströmbar ist.

Dadurch, daß das erste Katalysatorbett vom zweiten Katalysatorbett umgeben ist, ist es möglich, beide Katalysatoren funktionsmäßig durch das gleiche Mannloch etwa im Dom eines Reaktorgefäßes unabhängig voneinander zu wechseln.

Weitere Vorteile der Erfindung ergeben sich aufgrund der Unteransprüche, wobei die hier propagierte Gestaltung es zusätzlich möglich macht, das erste Katalysatorbett beispielsweise radial und das zweite Katalysatorbett axial durchströmbar zu gestalten, wobei es natürlich auch möglich ist, beide Katalysatorbetten axial oder radial durchströmbar auszubilden.

Vorteilhaft ist es, wenn die Abmessungen der Aufnahmen für das kleinere erste Katalysatorbett und das größere zweite Katalysatorbett so aufeinander abgestimmt sind, daß die Füllhöhen beider Katalysatorbetten im Gesamtgehäuse des Katalysators im wesentlichen identisch sind, wie dies die Erfindung ebenfalls vorsieht.

Im Dom des Gesamtkatalysatorgehäuses kann ein Zufuhrstutzen zum mit einem Dom versehenen inneren ersten Katalysatorbett vorgesehen sein und/oder ein zweiter Zufuhrstutzen zur Umfahrung des ersten Katalysators.

Wird das innere Katalysatorbett von außen nach innen durchströmt und liegt, wie oben schon ausgeführt, die Zuführung in einem oberen Dom oberhalb des ersten Katalysatorbettes, so wird das das erste Katalysatorbett durchströmende Fluid in der Regel über ein zentrisches Sammelrohr abgeführt, das zweckmäßig innerhalb des oberen Doms mündet, um so das zweite Katalysatorbett von oben zu beaufschlagen. Bei einer solchen Konstruktion kann auch vorgesehen sein, das zentrische innere Abströmrohr funktionsmäßig aus dem Gesamtgehäuse herauszuführen, so daß auch das erste Katalysatorbett weiterbetrieben werden kann, wenn beispielsweise das zweite Katalysatorbett umfahren werden soll.

Die Erfindung ist nachstehend anhand der Zeichnung beispielsweise näher erläutert. Diese zeigt in
- Fig. 1: einen entsprechenden Reaktor nach dem Stand der Technik und in
- Fig. 2: eine Vorrichtung nach der Erfindung.

Der allgemein mit 1 bezeichnete Reaktor nach dem Stand der Technik besteht aus einem Druckgefäß 2 mit einem Eintrittsstutzen 3 im oberen Dom und einem Austrittsstutzen 4 im unteren Dom sowie einem Mannloch 5 zwischen einem oberen Katalysatorbett 6 und einem unteren Katalysatorbett 7. Das obere Katalysatorbett kann beispielsweise den Co-Mo-Katalysator zur Umwandlung organischer Schwefelverbindungen in H₂S und das untere Katalysatorbett den ZnO-Katalysator zur Absorption des Schwefels aus H₂S darstellen. Das obere Katalysatorbett ruht auf einem Tragrost 8, unter diesem Tragrost 8 befindet sich ein katalysatorfreier Raum 9, in den der Stutzen des Mannloches 5 mündet, wobei beispielsweise der obere Katalysator über den Zufuhrstutzen 3 gewechselt werden kann, der untere über das Mannloch 5.

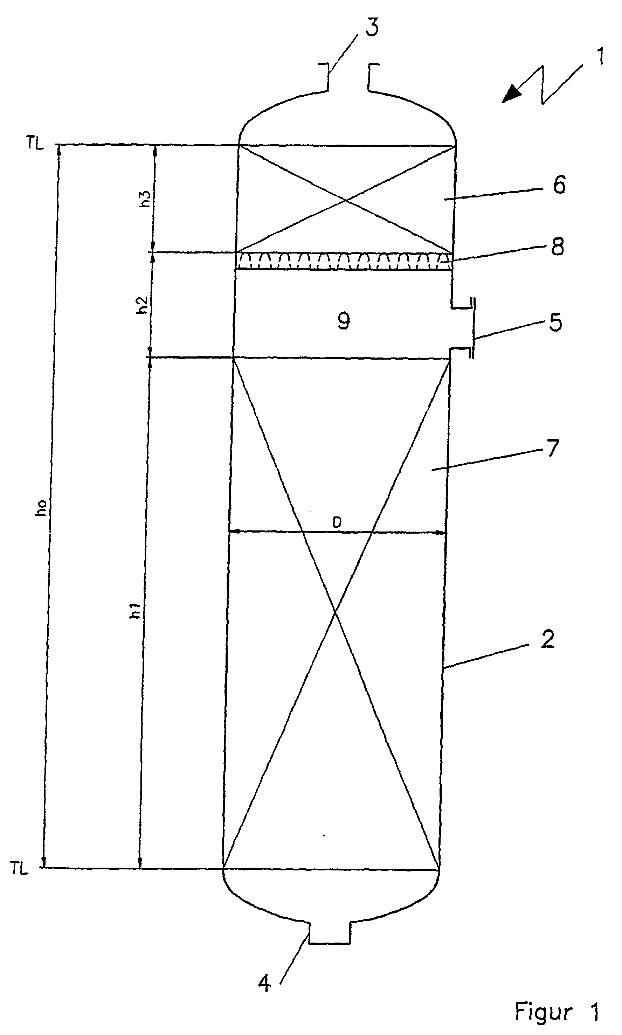

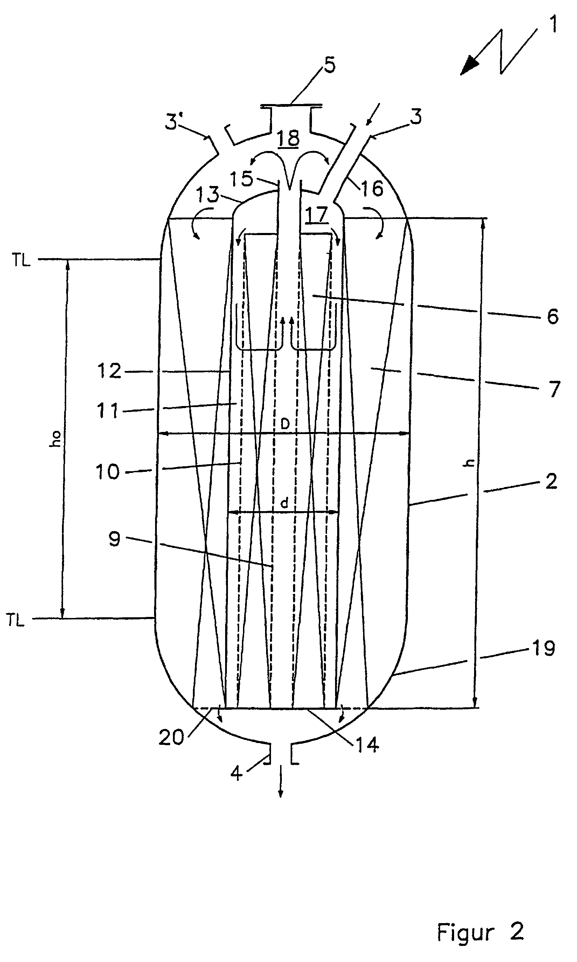

In Fig. 1 sind allgemeine Höhenangaben der Katalysatorbetten des Totraumes 9 sowie weitere Abmessungen angegeben, deren Äquivalent auch in Fig. 2 angegeben ist, die entsprechenden Maße sind als Beispiel in einer Tabelle weiter unten wiedergegeben.

Soweit wie möglich, sind in Fig. 2, die die erfindungsgemäße Vorrichtung darstellt, die gleichen Bezugszeichen gewählt, wie bei der Beschreibung des Standes der Technik nach Fig. 1.

So besteht dort der Reaktor 1 aus einem Druckgefäß 2 mit einem Eintrittsstutzen 3 und einem Austrittsstutzen 4 für das zu behandelnde Fluid. Im Dom des Druckgefäßes 2 befindet sich zentrisch ein Mannloch 5, wobei im Inneren des Gehäuses 2 ein zweites zylindrisches Gehäuse 12 angeordnet ist, welches zentrisch einen perforierten Zylinder 9 bzw. ein Abströmrohr 9 und darum zentrisch weiter außen ein perforiertes Rohr 10 enthält, wobei der Raum zwischen den perforierten Rohren 9 und 10 das erste Katalysatorbett 6 bildet. Die Außenwand 12 dieses ersten Katalysatorgefäßes bildet die Innenwand für den zweiten Katalysator 7, wobei im dargestellten Beispiel das erste Katalysatorbett radial und das zweite Katalysatorbett 7 axial durchströmt angeordnet ist, ohne daß die Erfindung hierauf beschränkt wäre.

Der Dom 13 des Gehäuses des ersten Katalysatorbettes 6 wird vom perforierten Zentralrohr 9 mit einem Stutzen 15 durchdrungen, wobei das erste Katalysatorgehäuse 12 am unteren Ende mit einer Bodenplatte 14 abgeschlossen ist, die in das mit 20 bezeichnete Traggitter für die zweite Katalysatorschüttung übergeht.

Die Funktionsweise der erfindungsgemäßen Vorrichtung ist, bezogen auf den Strömungsweg des zu behandelnden Fluids, die folgende:

Das zu behandelnde Gas wird dem Stutzen 3 zugeführt und gelangt über eine Leitung 16 in einen ersten Verteiler bzw. Domraum 17 und anschließend in einen Zuströmspalt 11, um dann über die perforierte Wand 10 den ersten Katalysator bzw. das erste Katalysatorbett 6 radial zu durchströmen, d.h. hier von außen nach innen. Über das perforierte Zentralrohr 9 über den Abgabestutzen 15 gelangt das Gas in den zweiten Verteiler bzw. Domraum 18 oberhalb der zweiten Katalysatorschüttung 7, um von dort in diese einzudringen, axial zu durchströmen und über den Traggitterring 20 zum Abgabestutzen 4 zu gelangen, der im unteren Bodenbereich 19 des Reaktorgefäßes 2 angeordnet ist.

In Fig. 2 ist noch ein zweiter Zufuhrstutzen 3' unmittelbar im zweiten Verteilerraum 18 dargestellt. Hier kann das Gas derart eingeleitet werden, daß es nur das zweite Katalysatorbett durchströmt, um etwa dann die erste Katalysatorschüttung 6 einfach umfahren zu können.

Nicht näher dargestellt ist die Möglichkeit, den Abgabestutzen 15 in den zweiten Domraum 18 bedarfsweise nach außen zu führen, um so den ersten Katalysator weiterbenutzen zu können, wenn beispielsweise die zweite Katalysatorschüttung umfahren werden soll.

Die Möglichkeit, über den zweiten Gaseintrittsstutzen 3' das erste Katalysatorbett zu umfahren, kann für Betreiber derartiger Vorrichtungen von erheblichem Vorteil sein, beispielsweise wenn das zu behandelnde Gas zeitweise relativ sauber ist, z.B. keine organischen Schwefelverbindungen mehr enthält und daher das erste Katalysatorbett nicht durchströmt werden muß oder bei Verwendung gleicher Katalysatoren für beide Betten das erste Katalysatorbett durch Verunreinigungen oder Zerstörungen hohen Druckverlust erzeugt oder gar blockiert.

Erkennbar werden auch die Kosten einer solchen Vorrichtung stark reduziert, was allein der Vergleich zwischen einem Reaktor nach dem Stand der Technik, d.h. nach Fig. 1, und einem Reaktor nach der Erfindung, d.h. nach Fig. 2, verdeutlicht, wobei die in den Figuren dargestellten Maße tabellarisch angegeben sind. Die in der letzten Zeile der Tabelle erkennbare Einsparung an Gewicht beträgt 29.000 kg, sie ist erkennbar äußerst erheblich, wodurch nicht nur Materialkosten, sondern auch Transport und Montagekosten einsparbar sind:

| | | **Figur 1** | **Figur 2** |
|---|---|---|---|
| Volumen 6 | [m³] | 13,6 | 13,6 |
| Volumen 7 | [m³] | 66,5 | 66,5 |
| h₀ | [mm] | 11.000 | 5.500 |
| h | [mm] | h₀ | 7.500 |
| h₁ | [mm] | 7.800 | -- |
| h₂ | [mm] | 1.600 | -- |
| h₃ | [mm] | 1.600 | -- |
| D | [mm] | 3.300 | 3.850 |
| d | [mm] | -- | 1.700 |
| Gewicht | kg | 109.000 | 80.000 |

## Patentansprüche

1. Vorrichtung zur Durchführung katalytischer chemischer Reaktionen eines Fluids in der Gasphase, beispielsweise der Entschwefelung von Kohlenwasserstoffen, wie beispielsweise Erdgas, unter Einsatz zweier im Strömungsweg des Gases befindlicher Katalysatoren gleicher oder unterschiedlicher Art innerhalb eines gemeinsamen Gehäuses in zwei Katalysatorbetten, wobei ein im Gehäuse mittig angeordnetes Katalysatorbett von dem zweiten Katalysatorbett umgeben ist,
**dadurch gekennzeichnet**,
a) daß das im Strömungsweg erste Katalysatorbett (6) ein kleineres Katalysatorvolumen aufweist als das zweite Katalysatorbett (7),
b) das erste und zweite Katalysatorbett (6,7) im wesentlichen zylindrisch ausgebildet sind, wobei die zylindrische Begrenzungswand (12) des inneren Katalysatorbettes (6) die zylindrische Innenwand des zweiten Katalysatorbettes (7) bildet und
c) das erste Katalysatorbett (6) radial und das zweite Katalysatorbett (7) axial durchströmbar ist.

2. Vorrichtung nach Anspruch 1,
**dadurch gekennzeichnet,**
**daß** die Abmessungen der Aufnahmen für das kleinere erste Katalysatorbett (6) und das größere zweite Katalysatorbett (7) so abgestimmt sind, daß die Füllhöhen beider Katalysatorbetten im Gesamtgehäuse (2) des Katalysators im wesentlichen gleich sind.

3. Vorrichtung nach einem der vorangehenden Ansprüche,
**dadurch gekennzeichnet,**
**daß** im Dom des Gesamtkatalysatorgehäuses (2) neben dem Zufuhrstutzen (3) zum Dom (13) des inneren ersten Katalysatorbettes (6) ein zweiter Zufuhrstutzen (3') zur Umfahrung des ersten Katalysatorbettes (6) vorgesehen ist.

## Claims

1. Apparatus for performing catalytic chemical reactions of a fluid in the gas phase, for example the desulphurisation of hydrocarbons such as natural gas, involving the use of two catalysts of identical or different types located in the flow path of the gas inside a common housing in two catalyst beds, one catalyst bed arranged centrally in the housing being surrounded by the second catalyst bed,
**characterised in that**
a) the first catalyst bed (6) lying in the flow path has a smaller catalyst volume than the second catalyst bed (7),
b) the first and second catalyst beds (6, 7) are of substantially cylindrical construction, the cylindrical boundary wall (12) of the inner catalyst bed (6) forming the cylindrical internal wall of the second catalyst bed (7) and
c) the first catalyst bed (6) is adapted for radial throughflow and the second catalyst bed (7) for axial throughflow.

2. Apparatus according to claim 1, **characterised in that** the dimensions of the locators for the smaller first catalyst bed (6) and the larger second catalyst bed (7) are harmonised with one another in such a way that the levels to which the two catalyst beds are filled are substantially identical in the catalyst's overall housing (2).

3. Apparatus according to either one of the preceding claims, **characterised in that** a second feed connector (3') for bypassing the first catalyst bed (6) is provided in the dome of the overall catalyst housing (2), in addition to the feed connector (3) to the dome (13) of the inner first catalyst bed (6).

## Revendications

1. Dispositif pour la réalisation de réactions chimiques catalytiques d'un fluide dans la phase gazeuse, par exemple la désulfuration d'hydrocarbures comme par exemple du gaz naturel, avec mise en oeuvre de deux catalyseurs de même type ou de types différents se trouvant sur le trajet d'écoulement du gaz à l'intérieur d'un caisson commun en deux lits de catalyseur, un lit de catalyseur disposé au milieu dans le caisson étant entouré par le second lit de catalyseur,
**caractérisé en ce que**
a) le premier lit de catalyseur (6) situé dans le trajet d'écoulement présente un plus petit volume de catalyseur que le second lit de catalyseur (7),
b) le premier et le second lits de catalyseur (6, 7) sont réalisés essentiellement en forme de cylindre, la paroi cylindrique (12) de délimitation du lit de catalyseur intérieur (6) formant la paroi interne cylindrique du second lit de catalyseur (7), et
c) le premier lit de catalyseur (6) est apte à être traversé radialement et le second lit de catalyseur (7) axialement.

2. Dispositif selon la revendication 1,
**caractérisé en ce que**
les dimensions des logements du premier lit de catalyseur (6) plus petit et du second lit de catalyseur (7) plus grand sont adaptées de façon à ce que les hauteurs de remplissage des deux lits de catalyseurs soient essentiellement équivalentes dans le caisson collectif (2) de catalyseur.

3. Dispositif selon l'une quelconque des revendications précédentes,
**caractérisé en ce que**,
dans le dôme du caisson collectif de catalyseur (2), à côté de l'embout d'alimentation (3) vers le dôme (13) du premier lit de catalyseur intérieur (6) est prévu un second embout d'alimentation (3') pour contourner le premier lit de catalyseur (6).
